# EUROPÄISCHE PATENTSCHRIFT

(11) **EP 4 050 236 B1**
(45) Veröffentlichungstag und Bekanntmachung des Hinweises auf die Patenterteilung: **05.06.2024**
(21) Anmeldenummer: 22156545.0
(22) Anmeldetag: 14.02.2022
(51) Int. Cl.: F16H 3/089, B60K 1/00, F16H 3/10, F16H 3/54, F16H 57/04, F16H 61/02, F16D 43/10, F16D 21/04

(54) **ANTRIEB MIT ZWEIGANGGETRIEBE MIT FLIEHKRAFTKUPPLUNG UND SCHALTELEMENT**
TWO-SPEED TRANSMISSION WITH CENTRIFUGAL CLUTCH AND SWITCHING ELEMENT
ENTRAINEMENT À TRANSMISSION À DEUX ÉTAGES POURVU D'EMBRAYAGE CENTRIFUGE ET ÉLÉMENT DE COMMUTATION

(30) Priorität: 26.02.2021 DE 102021201886
(43) Veröffentlichungstag der Anmeldung: 31.08.2022
(73) Patentinhaber: Magna PT B.V. & Co. KG, 74199 Untergruppenbach (DE)
(72) Erfinder: MANN, Manuel, 74928 Hüffenhardt (DE)
(74) Vertreter: Rausch, Gabriele

(56) Entgegenhaltungen:
- DE-A1- 4 212 324
- DE-A1-102011 101 151
- DE-A1-102016 212 867

## Beschreibung

Die Erfindung betrifft einen Antrieb mit einem Zweigang-Getriebe mit einer elektrischen Maschine, die an einer Eingangswelle angebunden ist, wobei die Eingangswelle zwei Schalträder für zwei Gangstufen, zwei Kupplungen in einer Kupplungseinheit und zwei Freiläufe trägt, und an eine Ausgangswelle mit zwei Festrädern und einem Endabtriebsrad anbindbar ist.

### Stand der Technik

Beim Beschleunigen eines elektrisch antreibbaren Kraftfahrzeugs aus dem Stand kann eine elektrische Maschine zunächst aus dem Stillstand mit einem im Wesentlichen konstanten Drehmoment bis zu einer Eckdrehzahl beschleunigen. Wenn die Eckdrehzahl erreicht ist, bleibt die Antriebsleistung der elektrischen Maschine im Wesentlichen konstant, so dass für eine höhere Drehzahl das Drehmoment abnimmt. Um eine große Drehmoment- und Drehzahlspreizung zu erreichen, kann ein Zwei-Gang-Getriebe vorgesehen sein, das unterschiedliche Übersetzungsverhältnisse bereitstellt. So kann in einem niedrigen Drehzahlbereich ein hohes Übersetzungsverhältnis vorgesehen sein, um zum Beschleunigen ein möglichst hohes Drehmoment bereitzustellen, während in einem hohen Drehzahlbereich ein niedriges Übersetzungsverhältnis vorgesehen sein kann, um eine möglichst hohe Fahrzeuggeschwindigkeit realisieren zu können. Im Vergleich zu Direktantrieben oder Antrieben mit einer Gangstufe halten Zwei-Gang-Getriebe den Motor in seinem effizientesten Bereich über weite Strecken jedes Fahrzyklusses. Dies sorgt auch für weniger Verbrauch - und Emissionen, falls zusätzlich ein Verbrennungsmotor oder ein Hybrid eingesetzt werden.

Es sind auch lastschaltbare Zweiganggetriebe mit geregelten Kupplungen und elektromechanischer oder elektrohydraulischer oder vollhydraulischer Aktuierung bekannt. Obwohl diese Getriebe lediglich für das Schalten von zwei Gängen ausgelegt sind, ist eine aufwendige und kostenintensive Kupplungsaktuierung mit zahlreichen elektronischen Komponenten, wie Aktuatoren, Sensoren, Kabelbaum-Anschluss, Controller, notwendig. Zudem müssen die Komponenten von extern mit Aktuierungsenergie versorgt werden.

Es wird in der DE10 2018 130 089 A1 ein Zwei-Gang-Getriebe für ein elektrisch antreibbares Kraftfahrzeug vorgeschlagen, mit einer mit einer elektrischen Maschine verbindbaren Eingangswelle zum Einleiten eines Drehmoments, einer mit einem Antriebsrad verbindbaren Ausgangswelle zum Ausleiten des Drehmoments, einer ersten Gangstufe zur Übersetzung einer Drehzahl der Eingangswelle an die Ausgangswelle mit einem ersten Übersetzungsverhältnis, mit einem ersten antreibenden Zahnrad und einem ersten angetriebenen Zahnrad, einer zweiten Gangstufe zur Übersetzung einer Drehzahl der Eingangswelle an die Ausgangswelle mit einem zum ersten Übersetzungsverhältnis verschiedenen zweiten Übersetzungsverhältnis, mit einem zweiten antreibenden Zahnrad und einem zweiten angetriebenen Zahnrad, einem ersten Freilauf, der dem ersten antreibenden Zahnrad oder dem ersten angetriebenen Zahnrad zugeordnet ist, und einer Reibungskupplung, die das zweite angetriebene Zahnrad mit der Ausgangswelle verbinden kann. Um das Getriebe noch kompakter bauen zu können und um es rekuperationsfähig zu machen, wird diese Reibungskupplung als einzige Reibungskupplung eingesetzt, wobei der erste Freilauf und die Reibungskupplung beide auf der gleichen Welle angeordnet sind und ein zweiter Freilauf vorgesehen ist.

Durch die Verwendung nur einer Kupplung kann das Getriebe nicht komplett ohne Unterbrechung des Drehmoments betrieben werden. Während der erste Gang sowohl ohne Zug- als auch ohne Schubkraftunterbrechung geschaltet werden kann, erfolgt im zweiten Gang eine Unterbrechung im Schubbetrieb.

Die Schaltung der Kupplung erfolgt auf klassische Weise mit einem geeigneten Aktuator.

EP 2 020 532 A1 betrifft ein Getriebe für einen Hydromotor, dessen Drehrichtung für das Schalten der Gangstufen umgedreht wird. der Hydromotor ist über zwei Gangstufen mit dem Abtrieb verbunden, wobei die Gangstufen durch Drehrichtungsumkehr des Hydromotors über Freiläufe schaltbar sind.

DE 199 41 705 A1 zeigt einen Antriebsstrang, umfassend eine Antriebseinheit, wie Brennkraftmaschine, mit einer Antriebswelle sowie mit zumindest einer mit der Antriebswelle in Wirkverbindung stehenden elektrischen Maschine, die zumindest als Motor und als Generator eingesetzt wird, wobei die Wirkverbindung zwischen der elektrischen Maschine und der Antriebswelle zumindest zwei, von einem zumindest in Start- und Betriebsphase untergliederten Betriebsmodus der elektrischen Maschine abhängige, sich selbsttätig einstellende Übersetzungsstufen aufweist. Zur Einstellung variable Übersetzungsstufen können Getriebe aller Art, beispielsweise stehende oder Umlaufgetriebe in vorteilhafter Weise vorgesehen werden, die Wirkverbindung kann aus Riementrieben, Zahnradpaaren, Reibradpaaren, Kettentrieben und dergleichen gebildet werden, wobei vorteilhafterweise bei einem stehenden Getriebe die Wirkverbindung durch zumindest ein Zahnradpaar gebildet sein kann.

Die Steuerung der Übersetzungen erfolgt über eine Kombination von Kupplungen und Freiläufen, die in dem Getriebe bestimmte Zahnradkombinationen bzw. Kraftwege freischalten beziehungsweise blockieren, wobei die Kupplungen, die sich je nach Einsatzort bei steigender Drehzahl schließen oder öffnen, nicht von außen angesteuert werden, sondern durch Fliehkräfte ein- und ausgerückt werden können.

So kann beispielsweise eine Kombination von zwei Freiläufen oder einer Kupplung und einem Freilauf oder zwei Kupplungen zwei verschiedene Übersetzungsstufen schalten.

DE102016212867A1 offenbart einen Antrieb mit einem Zweigang-Getriebe mit einer elektrischen Maschine, die an einer Eingangswelle angebunden ist, wobei die Eingangswelle zwei Schalträder für zwei Gangstufen sowie zwei Kupplungen in einer Kupplungseinheit trägt, und an eine Ausgangswelle mit zwei Festrädern und einem Endabtriebsrad anbindbar ist, wobei die Kupplungen mit einem hydraulischen Modul als einzigem Schaltelement verbunden und schaltbar sind.

Es ist daher Aufgabe der Erfindung ein optimiertes elektrisches Zweiganggetriebe zu schaffen, das zudem unabhängig von elektrischen Komponenten zur Aktuierung der Kupplungen arbeitet und eine Beölung integriert.

### Beschreibung der Erfindung

Die Aufgabe wird gelöst mit einem Antrieb mit einem Zweigang-Getriebe mit einer elektrischen Maschine, die an einer Eingangswelle angebunden ist, wobei die Eingangswelle zwei Schalträder für zwei Gangstufen, zwei Kupplungen und zwei Freiläufe trägt, und an eine Ausgangswelle mit zwei Festrädern und einem Endabtriebsrad anbindbar ist, wobei die Kupplungen mit einem rein mechanischem Fliehkraftmodul als einzigem Schaltelement verbunden und schaltbar sind.

Die Anordnung des Getriebes erlaubt ein Schalten, ohne dass elektrifizierte Komponenten oder ein Hydraulikkreis vorliegen müssen. Ein elektrischer Anschluss ist nicht vorhanden.

Weiterhin weist das erfindungsgemäße Zweigang-Getriebe ein Hydraulikmodul auf, das nur zur Beölung der Kupplungen dient und rein mechanisch mit einem Hydraulikzylinder arbeitet.

Diese reduzierte Hydraulik beinhaltet ebenfalls keine aktiv gesteuerten Komponenten, die einer Kontrolle von außen zugänglich sein müssten. Die Beölung erfolgt rein durch das Hydraulikmodul.

Es ist von Vorteil, wenn ein Freilauf an einer zweiten Gangstufe bis zu einer Mindestdrehzahl Drehbewegungen in beide Drehrichtungen ohne Sperrbetrieb erlaubt.

Es ist von Vorteil, wenn die Drehung des Fliehkraftmoduls eine axiale Bewegung, in positiver und negativer Richtung, einer Reaktionsscheibe bewirkt, die zur Schaltung der Kupplungseinheit dient.

Um die reine mechanische Aktuierung zu erreichen, können die Kupplungseinheit und das Fliehkraftmodul zwischen Federpaketen entlang der Getriebeeingangswelle angeordnet.

Es ist vorteilhaft, wenn die Betätigungsscheibe mit einer Schaltgabel parallel zur Schaltung der Kupplungen den Hydraulikzylinder aktuiert.

Es von Vorteil, wenn das Fliehkraftmodul auf dem Schaltrad der zweiten Gangstufe montiert ist.

Baulich ist es optimal, wenn die Kupplungseinheit zwischen beiden Gangstufen angeordnet ist. Druckringe halten die vormontierte Kupplungseinheit zusammen und bilden die mechanische Verbindung zum Fliehkraftmodul.

Es ist von Vorteil, wenn das Fliehkraftmodul einen Aufbau aus Scheiben, Nuten, Taschen , Fliehgewichten, Radialfedern und einem in der Drehung limitierten Freilauf aufweist, der Drehbewegungen einer Führungsscheibe in einer ersten Drehrichtung gegenüber einer Aktuierungsscheibe ermöglicht, der Drehbewegungen einer Führungsscheibe in einer zweiten Drehrichtung gegenüber einer Aktuierungsscheibe verhindert, der Drehbewegungen einer Aktuierungsscheibe in einer ersten Drehrichtung gegenüber einer Führungsscheibe ermöglicht und dabei nur um einen Teil einer vollständigen Umdrehung verdreht wird.

Die Aufgabe wird auch gelöst mit einem Verfahren zum Betreiben eines Zweigang-Getriebes mit einer elektrischen Maschine, die an einer Eingangswelle angebunden ist, wobei die Eingangswelle zwei Schalträder für zwei Gangstufen, zwei Kupplungen in einer Kupplungseinheit und zwei Freiläufe trägt, und an eine Ausgangswelle mit zwei Festrädern und einem Endabtriebsrad angebunden wird, wobei die Kupplungseinheit über ein rein mechanisches Fliehkraftmodul geschaltet wird, und die Beölung der Kupplungseinheit über eine mechanische Aktuierung von Hydraulikkolben umgesetzt wird.

### Beschreibung der Figuren

Figur 1 zeigt ein Schema des Zweigang-Getriebes,
Figur 2 zeigt einen Schnitt durch einen Freilauf,
Figur 3 ist ein Schnittbild durch den Aufbau der Figur 2,
Figur 4 zeigt einen Ausschnitt aus dem Zweigang-Getriebe mit Fliehkraftmodul und Kupplungseinheit,
Figur 5 zeigt eine Explosionsdarstellung des Fliehkraftmoduls mit Reaktionsscheibe, Tellerfeder und Zahnrad 2. Gang,
Figur 6 zeigt einen Schnitt durch einen Freilauf im Fliehkraftmodul,
Figur 7 zeigt ebenfalls eine Explosionsdarstellung
Figur 8 zeigt eine Schalttabelle.

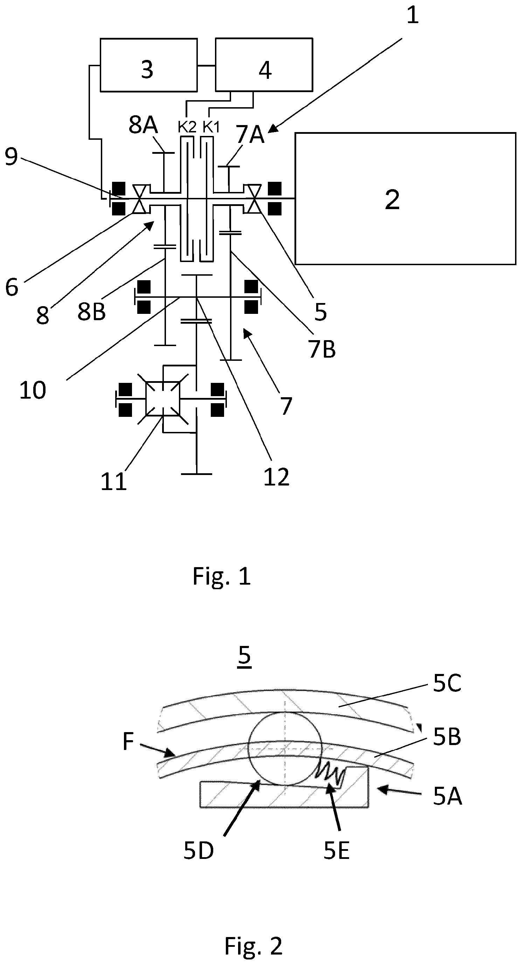

Figur 1 zeigt den Aufbau eines Antriebs mit einem Zweigganggetriebe 1 und einer elektrischen Maschine 2.

Das Zweiganggetriebe 1 umfasst eine Getriebeeingangswelle 9, an der die elektrische Maschine 2 direkt oder über eine Vorübersetzung angebunden ist. Auf der Getriebeeingangswelle 9 sind Schalträder 7A und 8A für die erste Gangstufe 7 und die zweite Gangstufe 8 angeordnet. Auf einer Abtriebswelle 10 sind die zu den Gangstufen dazugehörigen Festräder 7B und 8B und das Endabtriebsrad 12 angeordnet, das ein Differential 11 antreibt.

Beide Schalträder 7A uns 8A sind jeweils über einen separaten Freilauf 5 und 6 mit der Getriebeeingangswelle 9 verbindbar. Der Freilauf 5 der ersten Gangstufe 7 sperrt, wenn die Drehzahl ns der Getriebeantriebswelle größer ist als die Drehzahl n_{7A} des Schaltrads 7A der ersten Gangstufe 7. Der Freilauf 6 der zweiten Gangstufe sperrt, wenn die Drehzahl n_{8A} des Schaltrads 8A der zweiten Gangstufe 8 größer ist als die Drehzahl ns der Getriebeantriebswelle 9. Diese Sperrbedingung des Freilaufs 6 ist konstruktionsbedingt am Freilauf 6 allerdings erst ab einer Mindestdrehzahl n_{8Amin} gegeben. Hierdurch wird ein Rückwärtsfahren durch die Drehrichtungsumkehr der elektrischen Maschine 2 ermöglicht.

Realisiert ist der Freilauf 5 wie in Figur 2 dargestellt. Der Freilauf besteht aus einem Innenring 5A und einem Außenring 5C. Innerhalb dieser beiden Ringe sind Klemmkörper 5D in einem Käfig 5B verbaut. Der Käfig ist radial mit einer Federkraft F belastet, sodass die Klemmkörper 5D am Außenring 5C nicht anliegen. Die Anlage der Klemmkörper 5D, im Ausführungsbeispiel Kugeln, am Außenring 5C erfolgt erst ab einer Mindestdrehzahl n_{8Amin} aufgrund der steigenden Fliehkraft. Ab dieser Drehzahl n_{8Amin} werden die Klemmkörper 5D mit Federn 5E gegen den Innenring 5A und den Außenring 5C gedrückt. Der Innenring 5A weist eine Rampe geringer Steigung auf sowie eine Kante, an der die Feder 5E angelegt ist. Es handelt sich um einen Klemmrollenfreilauf.

Es ist auch denkbar ein von der Figur 2 verschiedenes Design für den Freilauf 6 zu verwenden, sofern die beschriebene Funktionalität weiterhin erfüllt bleibt.

Zusätzlich ist sowohl das Schaltrad 7A der ersten Gangstufe 7 als auch das Schaltrad 8A der zweiten Gangstufe 8 jeweils über eine Reibungskupplung K1, K2 mit der Getriebeantriebswelle 9 verbindbar. Beide Reibungskupplungen K1, K2 sind zu einer Kupplungseinheit K zusammengefasst, die separat vormontiert werden kann.

In der Figur 1 skizziert ist ein Hydraulikmodul 3, das für die Kupplungskühlung der Kupplungseinheit K mit Hydrauliköl dient. Ein Fliehkraftmodul 4 ist mit der Kupplungseinheit K und dem Hydraulikmodul 3 verbunden und dient zur Aktuierung der Kupplungen K1, K2 und zur Aktuierung des Hydraulikmoduls.

In einer nicht unter den Wortlaut des Anspruchs 1 fallenden Ausführung sind die Kupplungen K1 und K2 als trockene Reibungskupplungen ausgeführt. Hierdurch kann auf das Hydraulikmodul 3 verzichtet werden.

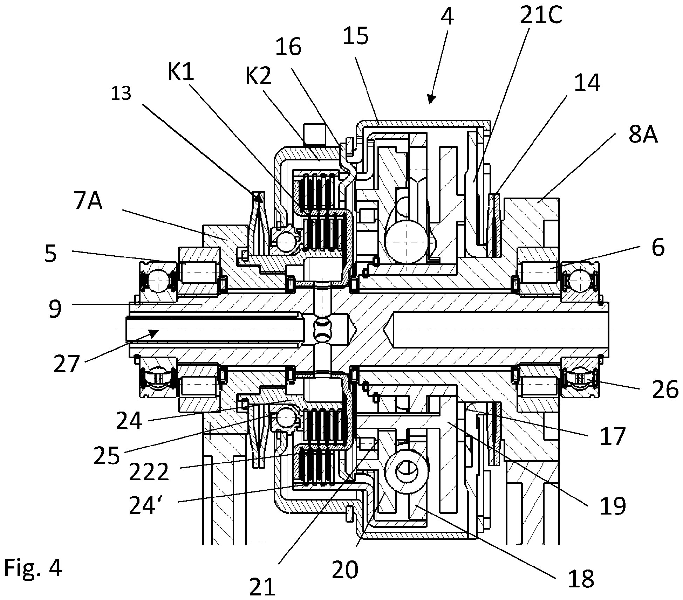

Die Kupplungseinheit K besteht, wie in Figur 4 gezeigt, aus einem zentralen Lamellenträger 222, einem inneren Lamellenträger 24 und einem äußeren Lamellenträger 24'. Auf dem inneren Lamellenträger 24 ist ein Ausrücklager 25 angeordnet, das links über ein erstes Federpaket 13 und einen Sicherungsring gehalten wird und rechts gegen das Lamellenpaket der Kupplung gedrückt werden kann.

Am Außenring des Ausrücklagers ist ein Druckring 15 der inneren Kupplung K1 angebracht, der zusammen mit einem Druckring 16 der äußeren Kupplung K2 die vormontierte Kupplungseinheit K zusammenhält. Am zentralen Lamellenträger 222 sowie am inneren Lamellenträger 24 ist jeweils eine Passverzahnung angebracht, durch die die Kupplungseinheit K mit dem Schaltrad 7A der ersten Gangstufe 7 und der Getriebeantriebswelle 9 verbunden werden kann.

Auf dem Schaltrad 8A der zweiten Gangstufe sitzt ein Fliehkraftmodul 4 und eine Reaktionsscheibe 20 und ein zweites Federpaket 14.

Das zweite Federpaket 14 wird bei der Vormontage des Schaltrads 8A der zweiten Gangstufe über einen Sicherungsring und entsprechende Passscheiben vorgespannt.

Bei der Montage des vormontierten Schaltrads 8A der zweiten Gangstufe 8 wird der äußere Lamellenträger 24' mit einer Übergabescheibe 18 in Rotationsrichtung formschlüssig verbunden und axial durch nicht näher dargestellte radiale Elemente axial gesichert.

Zusätzlich wird der Druckring 15 der inneren Kupplung K1 in Rotationsrichtung formschlüssig mit der Reaktionsscheibe 20 verbunden und durch einen Sicherungsring axial gesichert.

Bei der Getriebemontage auf der Antriebswelle wird zunächst von links kommend das Schaltrad 7A der erster Gangstufe 7 mit den dazugehörigen Lagern aufgeschoben. Anschließend wird der Freilauf 5 für das Schaltrad 7A der ersten Gangstufe 7 und das Hauptlager montiert und durch einen Sicherungsring axial gesichert.

Danach wird von rechts kommend zunächst die Kupplungseinheit K und danach ein Axiallager und das Schaltrad 8A der zweiten Gangstufe 8 auf dem das Fliehkraftmodul 4, mit der Reaktionsscheibe 20 und dem vorgespannten Federpaket 14 vormontiert ist, aufgeschoben. Anschließend wird der Druckring 15 sowie der äu-βere Lamellenträger 24' mit dem Fliehkraftmodul 4 verbunden und ein Axiallager, der Freilauf 6 für das Schaltrad 8A der zweiten Gangstufe 8 sowie das Hauptlager 26 montiert. Zuletzt wird das Federpaket 13 vorgespannt, sodass die Kupplung K1 aktiv überdrückt ist. Die Vorspannung wird durch eine Passscheibe und den Sicherungsring am rechten Hauptlager abgesichert. Zudem wird in die Getriebeantriebswelle 9 ein Zuführrohr 27 für die Ölzuführung zur Kühlung der Kupplungen K1, K2 eingepresst.

Am äußeren Druckring 15 greift eine nicht dargestellte Schaltgabel ein, die über eine nicht näher dargestellte Verbindung mit einem Hydraulikzylinder verbunden ist. Dieser befindet sich im Getriebesumpf und ist somit ständig von Öl umgeben. Dementsprechend wird bei einer axialen Bewegung des äußeren Druckrings 15 gleichzeitig ein Kolben im Hydraulikzylinder bewegt und somit in einer Kammer des Hydraulikzylinders Öl über ein Drosselrückschlagventil angesaugt und in einer anderen Kammer über ein Drosselrückschlagventil Öl über ein Verrohrungssystem in die Getriebeantriebswelle 9 gedrückt. Das Volumen wird in der Entwicklung über die Größe des Hydraulikzylinders sowie die kinematische Verbindung zum äußeren Druckring 15 und dementsprechend dem Hub voreingestellt.

In der Grundstellung ist die Kupplung K1 geschlossen und somit das Schaltrad der ersten Gangstufe 7 im Zug und im Schub mit der Getriebeantriebswelle 9 verbunden. Die Kupplung K2 ist geöffnet. Das heißt, dass das Federpaket 13 und das Federpaket 14 aufgrund der Montage vorgespannt sind, wobei die Vorspannung am Federpaket 14 größer ist als am Federpaket 13, wobei Kupplung K1 geschlossen und Kupplung K2 offen ist.

Zur Aktuierung mithilfe des Fliehkraftmoduls 4 muss ausschließlich die Differenzkraft aus den Federkräften der Federpakete 13, 14, die Rückstellkräfte aus den radialen Federn im Fliehkraftmodul 4 sowie die Reibung im System überbrückt werden. Das Federpaket 13 schließt die innere Kupplung K1, das Federpaket 14 schließt die äußere Kupplung K2. Es müssen für eine solche Kupplungseinheit keine engen Bauteiltoleranzen eingehalten werde, da die Kupplungen K1 und K2 aufgrund der Federpakete jeweils aktiv überdrückt werden.

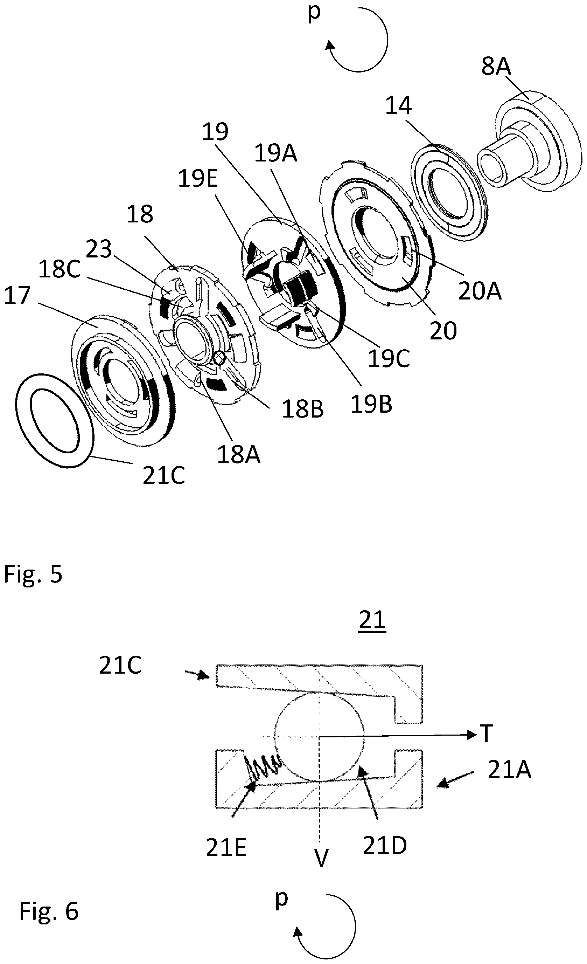

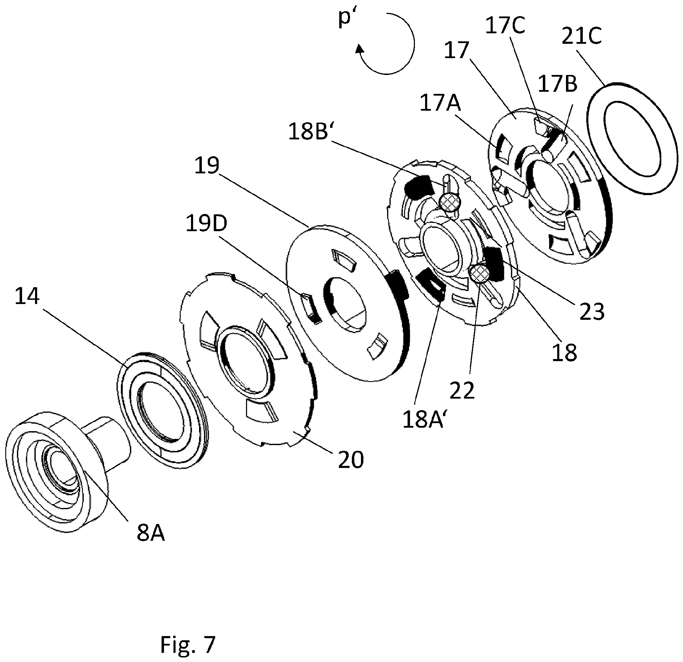

Die einzelnen Bauteile des Fliehkraftmoduls 4 sind in den Figuren 5 und 7 jeweils in einer Explosionsdarstellung dargestellt, wobei hier die axiale Richtung umgekehrt wurde.

Das Fliehkraftmodul 4 besteht im Wesentlichen aus einer zentralen Übergabescheibe 18, einer Führungsscheibe 17 und einer Aktuierungsscheibe 19. Die Führungsscheibe 17 und die Aktuierungsscheibe 19 sind auf der Übergabescheibe 18 verdrehbar gelagert und über einen in der Drehbewegung für einen Verdrehwinkel limitierten Freilauf 21 miteinander verbunden. Dabei ist die Führungsscheibe 17 mit einem Außenring 21C des Freilaufs 21 und die Aktuierungsscheibe 19 mit dem Innenring 21A des Freilaufs 21 verbunden. Dazu ist an der Führungsscheibe 19 wenigstens ein Steg 19E und an der Übergabescheibe 18 wenigstens eine dazu passende Aussparung 18C vorhanden.

In Figur 6 wird ein Ausschnitt des Freilaufs 21 bei einem Schnitt mit einer zur Rotationsachse des Innen- bzw. Außenrings 21A und 21C orthogonalen Schnittebene durch den Mittelpunkt eines Klemmkörpers 21D dargestellt.

Der Freilauf 21 besteht aus einem Außenring 21C, einem Innenring 21A sowie einem dazwischenliegenden kugelförmigen Klemmkörper 21D, der über eine Feder 21E sowohl an den Innenring 21A, als auch an den Außenring 21C gedrückt wird. Die Reaktionskraft der Feder 21E wird dabei an einer Kante am Innenring 21A abgestützt. Innenring 21A und Außenring 21C sind derartig ausgeführt, dass die aus beiden Ringen gebildete Klemmkörperlaufbahn relativ zu einer Tangente T am Klemmkörper, die senkrecht auf der Verbindungslinie V zwischen Rotationsachse und Klemmkörpermittelpunkt steht, auf der zur Feder 21E abgewandten Seite zulaufend ist.

Über die Länge der Klemmkörperlaufbahn und die Länge des Federwegs der Feder 21E kann der mögliche Verdrehwinkel zwischen Innenring 21A und Außenring 21C in der geometrischen Auslegung variiert werden.

Mit dem Freilauf 21 wird eine Drehbewegung des Außenrings 21C bei festgehaltenem Innenring 21A in einer ersten Drehrichtung p für einen ersten Verdrehwinkel a1 ermöglicht. Die Drehbewegung des Innenrings 21A bei festgehaltenem Außenring 21C in einer zweiten, gegenläufigen Drehrichtung p' für einen zweiten Verdrehwinkel a2 verhindert und eine Drehbewegung des Innenrings 21A bei festgehaltenem Außenring 21C in einer ersten Drehrichtung p für den ersten Verdrehwinkel a1 ermöglicht.

Bezogen auf die Abbildung 6 entspricht die erste Drehrichtung einer Rotation im Uhrzeigersinn und die zweite Drehrichtung einer Rotation entgegen dem Uhrzeigersinn.

Durch diesen Aufbau wird eine Drehbewegung der Führungsscheibe 17 in der ersten Drehrichtung p gegenüber der Aktuierungsscheibe 19 ermöglicht, die Drehbewegungen der Führungsscheibe 17 in einer zweiten Drehrichtung p' gegenüber der Aktuierungsscheibe 19 verhindert und die Drehbewegungen der Aktuierungsscheibe 19 in der ersten Drehrichtung p gegenüber der Führungsscheibe 17 ermöglicht, wobei jeweils nur um einen Teil einer vollständigen Umdrehung, z.B. 20-40°, verdreht wird.

Auf der dem Freilauf 21 abgewandten Seite der Führungsscheibe 17 befindet sich am Umfang verteilt wenigstens eine erste Nut 17A, deren Mittellinie einen konzentrisch zur Rotationsachse der Führungsscheibe 17 positionierten Kreisbogen beschreibt. Zusätzlich befindet sich auf der dem Freilauf 21 abgewandten Seite der Führungsscheibe 17 am Umfang verteilt wenigstens eine zweite Nut 17B, deren Mittellinie eine parallele zu einer Ursprungsgeraden durch die Rotationsachse der Führungsscheibe 17 ist. Das untere Ende der zweiten Nut 17B ist am Schnittpunkt zwischen einer vertikalen Achse durch die Rotationsachse der Führungsscheibe 17 und der Mittellinie der zweiten Nut 17B positioniert. Am oberen Ende der zweiten Nut 17B befindet sich eine Rampe 17C auf der zur vertikalen Achse durch die Rotationsachse der Führungsscheibe 17 zugewandten Seite. Die Mittellinie der Rampe 17C beschreibt einen konzentrisch zur Rotationsachse der Führungsscheibe 17 positionierten Kreisbogen.

Auf der der Übergabescheibe 18 zugewandten Seite der Aktuierungsscheibe 19 befindet sich am Umfang verteilt wenigstens eine erste Nut 19A, deren Mittellinie einen konzentrisch zur Rotationsachse der Aktuierungsscheibe 19 positionierten Kreisbogen beschreibt. Zusätzlich befindet sich auf der zur Übergabescheibe 18 zugewandten Seite der Aktuierungsscheibe 19 am Umfang verteilt wenigstens eine zweite Nut 19B, deren Mittellinie eine parallele zu einer Ursprungsgeraden durch die Rotationsachse der Aktuierungsscheibe 19 ist. Das untere Ende der zweiten Nut 19B ist relativ zu einer vertikalen Achse durch die Rotationsachse der Aktuierungsscheibe 19 axial verschoben positioniert. Am unteren Ende der zweiten Nut 19B befindet sich eine erste Rampe 19C auf der zur vertikalen Achse durch die Rotationsachse der Aktuierungsscheibe 19 zugewandten Seite. Die Mittellinie der ersten Rampe 19C beschreibt einen konzentrisch zur Rotationsachse Aktuierungsscheibe 19 positionierten Kreisbogen.

Auf der der Übergabescheibe 18 abgewandten Seite der Aktuierungsscheibe 19 befindet sich am Umfang verteilt wenigstens eine zweite Rampe 19D deren Mittellinie einen konzentrisch zur Rotationsachse der Aktuierungsscheibe 19 positionierten Kreisbogen beschreibt.

Die zweite Rampe 19D der Aktuierungsscheibe 19 ist im zusammengebauten Zustand des Fliehkraftmoduls in Kontakt mit wenigstens einer Tasche 20A einer Reaktionsscheibe 20, sodass bei einer Rotation der Aktuierungsscheibe 19 eine axiale Bewegung der Reaktionsscheibe 20 ermöglicht wird.

Auf der Übergabescheibe 18 befinden sich auf der zur Führungsscheibe 17 und der zur Aktuierungsscheibe 19 zugewandten Seite jeweils wenigstens eine erste Nut 18A und 18A', deren Mittellinien jeweils einen konzentrisch zur Rotationsachse der Übergabescheibe 18 positionierten Kreisbogen beschreiben. Die Nuten 18A und 18A' sind auf der Übergabescheibe 18 derartig angeordnet, dass sie in der Grundstellung genau gegenüber der ersten Nut 17A auf der Führungsscheibe 17 und genau gegenüber der ersten Nut 19B auf der Aktuierungsscheibe 19 liegen.

Zusätzlich befindet sich auf der Übergabescheibe 18 auf der zur Führungsscheibe 17 und der zur Aktuierungsscheibe 19 zugewandten Seite jeweils wenigstens eine zweite radiale Nut 18B und 18B'. Das untere Ende der zweiten radialen Nuten 18B und 18B' befindet sich jeweils auf der Höhe der Mittellinie der Rampe 17C auf der Führungsscheibe 17. Das obere Ende der zweiten radialen Nuten 18B und 18B' befindet sich jeweils auf der Höhe der Mittellinie der Rampe 19C auf der Aktuierungsscheibe 19. Sowohl am oberen Ende als auch am unteren Ende der zweiten radialen Nuten 18B und 18B' ist eine Durchgangsbohrung angebracht. Der Durchmesser der Durchgangsbohrung ist dabei größer als der Durchmesser eines kugelförmigen Fliehgewichts 22.

Im vormontierten Fliehkraftmodul ist zwischen der Führungsscheibe 17 und der Übergabescheibe 18 wenigstens ein Federelement 23, das als gebogene Radialfeder ausgeführt ist, in dem Kanal, der sich aus der ersten Nut 17A auf der Führungsscheibe 17 und der ersten Nut 18A auf der Übergabescheibe 18 bildet, derartig angeordnet, dass bei einer Rotation der Führungsscheibe 17 gegenüber der Übergabescheibe 18 in einer ersten Drehrichtung p das Federelement 23 komprimiert wird.

Zudem ist im vormontierten Fliehkraftmodul 4 zwischen der Aktuierungsscheibe 19 und der Übergabescheibe 18 wenigstens ein Federelement, das als gebogene Radialfeder 23 ausgeführt ist, in dem Kanal, der sich aus der ersten Nut 19A auf der Aktuierungsscheibe 19 und der ersten Nut 18A` auf der Übergabescheibe bildet, derartig angeordnet, dass bei einer Rotation der Aktuierungsscheibe 19 gegenüber der Übergabescheibe 18 in einer zweiten Drehrichtung p' das Federelementkomprimiert wird.

Weiterführend ist in der Ausgangsstellung des Fliehkraftmoduls zwischen der Führungsscheibe 17 und der Übergabescheibe 18 wenigstens ein Fliehgewicht 22 in dem Kanal, der sich aus der zweiten Nut 17B auf der Führungsscheibe 17 und der zweiten Nut 18B auf der Übergabescheibe 18 bildet und durch die Rampe 19C auf der Aktuierungsscheibe 19 abgeschlossen ist, angeordnet.

Die Bauteile des Fliehkraftmoduls 4 sind auf dem Zahnrad 8A derartig vormontiert, dass in der Grundstellung auf die Fliehgewichte keine Axialkräfte wirken.

Während der positiven Fahrzeuglängsbeschleunigung bei einer Zughochschaltung steigt die Fliehkraft von den Fliehgewichten 22 im Fliehkraftmodul 4, bis bei einer Fahrgeschwindigkeit v1 der Schaltpunkt erreicht wird und durch das Fliehkraftmodul die Reaktionsscheibe 20 verdreht und somit der Druckring 15 durch das vorgespannte Federpaket 14 in axialer Richtung auf die Kupplungen K1, K2 hin verschoben wird.

Dadurch wird geometrisch bedingt zunächst über die Kinematik und über den Hydraulikzylinder Öl in die Getriebeantriebswelle 9, in das Zuführrohr 27, gedrückt. Die innere Kupplung K1 wird über das Ausrücklager 25 geöffnet und dabei das Federpaket 13 der Kupplung K1 komprimiert. Anschließend wird die äußere Kupplung K2 geschlossen. Hierdurch erfolgt eine Freilaufschaltung mit der zweiten Gangstufe 8, indem der Freilauf 5 am Schaltrad 7A der ersten Gangstufe 7 kurzfristig nach dem Öffnen der Kupplung K1 die Drehmomentübertragung übernimmt und anschließend nach geschlossener Kupplung K2 nicht mehr sperrt.

In der Zwischenphase, während beide Kupplungen K1 und K2 geöffnet sind, wird das Drehmoment weiterhin über die erste Gangstufe 7 und den gesperrten Freilauf 5 übertragen. Erfolgt exakt zu diesem Zeitpunkt eine Änderung der Fahrzeuglängsbeschleunigung ins Negative wird die Kupplung K2 aufgrund der Funktionsweise des Fliehkraftmoduls 4 trotzdem geschlossen und das Fahrzeug fährt in der zweiten Gangstufe 8 bis die Rückschaltgeschwindigkeit v2 unterschritten wird. Hierbei kann kurzfristig kein Rekuperationsmoment durch die elektrische Maschine 2 übernommen werden, was allerdings kein Problem darstellt, da die elektrische Maschine 2 zuvor auch nicht rekuperiert hat.

Bei einer Zugrückschaltung erfolgt der gleiche Ablauf nur in umgekehrter Reihenfolge. Dementsprechend wird beim Unterschreiten der Rückschaltgeschwindigkeit v2 durch das Fliehkraftmodul 4 über die Reaktionsscheibe 20 das Federpaket 14 komprimiert und somit durch das Federpaket 13 und den Druckring 15 sowie die Kinematik und den Hydraulikzylinder Öl in die Getriebeantriebswelle 9 gedrückt, die Kupplung K2 geöffnet, bis der Freilauf 5 am Schaltrad 7A der ersten Gangstufe greift und die Kupplung K1 geschlossen.

Erfolgt exakt während des Schaltvorgangs eine Änderung der Fahrzeuglängsbeschleunigung ins Negative wird die Kupplung K1 trotzdem geschlossen und das Fahrzeug fährt in der ersten Gangstufe 7. Die Freiläufe 5 und 6 sperren zu diesem Zeitpunkt nicht, da das Schaltrad 8A der zweiten Gangstufe 8 langsamer dreht als die Getriebeantriebswelle 9 und das Schaltrad 7A der ersten Gangstufe 7 schneller dreht als die Getriebeantriebswelle 9. Hierbei kann kurzfristig kein Rekuperationsmoment durch die elektrische Maschine 9 übernommen werden, was allerdings kein Problem darstellt, da die elektrische Maschine 9 zuvor auch nicht rekuperiert hat.

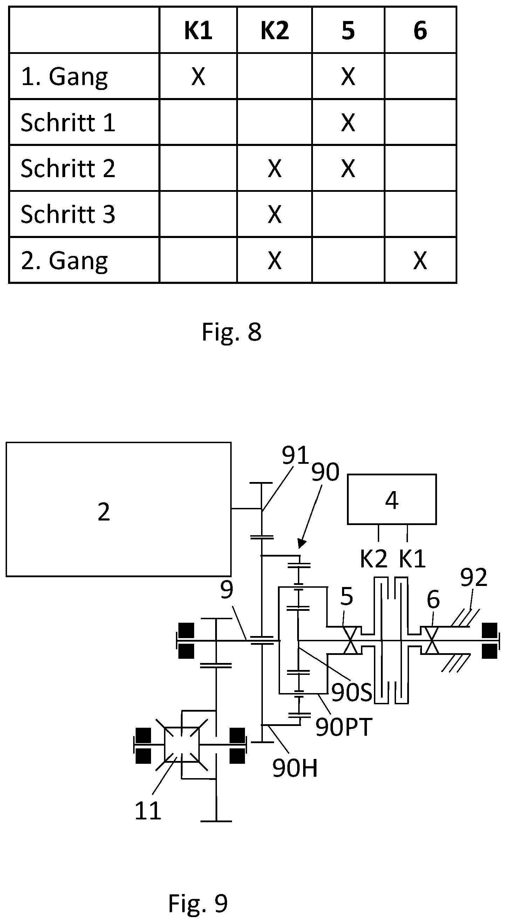

Das Schaltschema ist in der Figur 8 als Tabelle dargestellt. Dabei sind die beiden Kupplungen K1 und K2 sowie die beiden Freiläufe 5 und 6 jeweils in einer Spalte dargestellt. Ein Kreuz in der Spalte bedeutet, dass die Komponente geschlossen bzw. gesperrt ist. Die Zweigang- Getriebeanordnung ermöglicht sowohl eine ZugHochschaltung als auch eine Zugrückschaltung zwischen den beiden Gängen. Auch eine Schubrückschaltung ist ohne Unterbrechung des Moments möglich.

Der Schaltzeitpunkt der Kupplungen ist immer fliehkraftgesteuert und kann dementsprechend ausschließlich bei der Entwicklung eingestellt und danach nicht mehr verändert werden.

Die Schaltzeiten sind ebenfalls vorgegeben und von dem hydraulischen Drosselventilrückschlagventil im Hydraulikzylinder bei der Beölung der Kupplungen vorgegeben.

Die Kupplungskühlung wird ebenfalls über das Volumen im Hydraulikzylinder vorbestimmt.

Im Folgenden wird der Ablauf für das Hochschalten vom ersten in den zweiten Gang mit dem Fliehkraftmodul erklärt.

Beim Hochschalten nimmt die Drehzahl des Schaltrades 8A zu und das Fliehgewicht 22 wandert in dem Kanal, der sich aus der zweiten Nut 17B auf der Führungsscheibe 17 und der zweiten Nut 18B auf der Übergabescheibe 18 bildet und durch die Rampe 19C auf der Aktuierungsscheibe 19 abgeschlossen ist radial nach außen, Schritt 1.

Dadurch verdreht sich die Führungsscheibe 17 gegenüber der Übergabescheibe 18 und der Aktuierungsscheibe 19 in der ersten Drehrichtung p. Die Radialfeder, das Federelement 23 wird komprimiert und der Freilauf 21 sperrt nicht.

Wenn die Drehzahl hoch genug ist, ist das Fliehgewicht 22 soweit radial nach au-ßen verschoben, dass das Fliehgewicht 22 aus dem Kanal, der sich aus der zweiten Nut 17B auf der Führungsscheibe 17 und der zweiten Nut 18B auf der Übergabescheibe 18 bildet, axial nach rechts durch die Übergabescheibe 18 in den Kanal, der sich aus der ersten Nut 19A auf der Aktuierungsscheibe 19 und der ersten Nut 18A' auf der Übergabescheibe bildet und durch die Rampe 17C auf der Führungsscheibe 17 abgeschlossen ist, ausweichen kann , Schritt 2.

Die Radialfeder, das Federelement 23 drückt dann die Führungsscheibe 17 in der zweiten Drehrichtung p' in ihre Ausgangsstellung zurück.

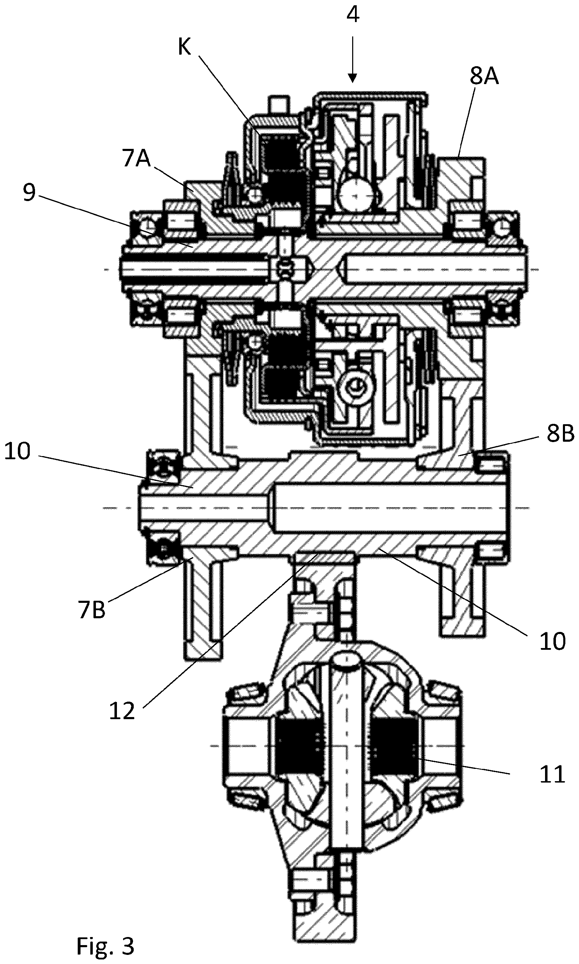

Dabei sperrt der Freilauf 21 und die Aktuierungsscheibe 19 wird in einer zweiten Drehrichtung p' gegenüber der Übergabescheibe 18 verdreht und durch das Fliehgewicht 22 und den Kanal, der sich aus der ersten Nut 19A auf der Aktuierungsscheibe 19 und der ersten Nut 18A` auf der Übergabescheibe bildet sowie durch die Rampe 17C auf der Führungsscheibe 17 in seiner Position gehalten. Gleichzeitig wird die Radialfeder 23 komprimiert und die Reaktionsscheibe 20 aufgrund der Rampe 19D axial in Fig. 3 nach links in Richtung der Übergabescheibe 18 verschoben, wodurch das zweite Federpaket 14 entspannt wird.

Beim Rückschalten wird ein Schritt 3 wie folgt ausgeführt: Das Fliehgewicht 22 wird mit abnehmender Drehgeschwindigkeit des Zahnrads 8A durch die geringer werdende Fliehkraft aufgrund der Feder-Rückstell-Kraft der Radialfeder 23 radial nach innen gedrückt, so dass die Reaktionsscheibe 20 in einer ersten Drehrichtung p rotiert. Es erfolgt noch keine axiale Bewegung der Reaktionsscheibe.

Mit abnehmender Drehgeschwindigkeit ist das Fliehgewicht 22 im Schritt 4 radial soweit innen angeordnet, dass es aus dem Kanal, der sich aus der ersten Nut 19A auf der Aktuierungsscheibe 19 und der ersten Nut 18A` auf der Übergabescheibe bildet nach links durch die Übergabescheibe 18 in den Kanal, der sich aus der zweiten Nut 17B auf der Führungsscheibe 17 und der zweiten Nut 18B auf der Übergabescheibe 18 bildet und durch die Rampe 19C abgeschlossen wird, ausweichen kann . Die Radialfeder 23 drückt bei diesem Vorgang die Aktuierungsscheibe 19 in ihre Ausgangsstellung zurück. Dabei wird die Aktuierungsscheibe 19 in einer der Drehrichtung p verdreht. Der Freilauf 21 sperrt hierbei nicht und die Reaktionsscheibe 20 wird aufgrund der Rampe 19D auf der Aktuierungsscheibe 19 axial -in Fig. 3 nach rechts- in Richtung des Zahnrads 8A verschoben, wodurch das zweite Federpaket 14 komprimiert wird.

Die beschriebene Fliehkraftkupplung 4 kann auch in einem alternativen, jedoch nicht beanspruchten Getriebeaufbau zum Einsatz kommen. Anstatt wie in Figur 1 gezeigt, einem reinen Vorgelegegetriebe, kann der Aufbau einen Radsatz eines Planetengetriebes aufweisen. Auch eine Mischbauweise aus Vorgelege- und Planetengetriebe ist als Ausführungsform denkbar.

Bei einem Aufbau mit einem Planetengetriebe entspräche die Getriebeeingangswelle 9 dann einem Sonnenrad des Planetengetriebes, das Schaltrad der ersten Gangstufe 7 entspräche dem Getriebegehäuse und das Schaltrad der zweiten Gangstufe 8 dem Planetenträger, wobei das Fliehkraftmodul 4 auf dem Planetenträger angeordnet ist und die Kupplungseinheit K das Sonnenrad gegen das Getriebegehäuse festbremsen und den Planetensatz so verblocken kann.

### Bezugszeichen

1 Zweiganggetriebe
2 Elektrische Maschine
3 Hydraulikmodul
4 Fliehkraftmodul
5 erster Freilauf
5A Innenring
5B Käfig
5C Außenring
5D Klemmkörper
5E Feder
6 zweiter Freilauf
7 erste Gangstufe
7A Schaltrad erste Gangstufe
7B Festrad erste Gangstufe
8 zweite Gangstufe
8A Schaltrad zweite Gangstufe
8B Festrad zweite Gangstufe
9 Getriebeeingangswelle
10 Abtriebswelle
11 Differential
12 Endabtriebsrad
13 erstes Federpaket
14 zweites Federpaket
K1 erste Kupplung
K2 zweite Kupplung
K Kupplungseinheit
15 Druckring erste Kupplung
16 Druckring zweite Kupplung
17 Führungsscheibe
17A erste Nut
17B zweite Nut
17C Rampe
18 Übergabescheibe
18A erste Nut
18A' erste Nut
18B zweite Nut
18B' zweite Nut
18C Aussparung
19 Aktuierungsscheibe
19A erste Nut
19B zweite Nut
19C erste Rampe
19D zweite Rampe
19E Steg
20 Reaktionsscheibe
20A Tasche
21 Freilauf Fliehkraftmodul
21A Innenring
21C Außenring
21D Klemmkörper
21E Feder
222 Zentraler Lamellenträger
23 Federelement, Radialfeder
24' Äußerer Lamellenträger
24 Innerer Lamellenträger
25 Ausrücklager
26 Hauptlager
27 Zuführrrohr
n8A Drehzahl
n7A Drehzahl
n8Amin Mindestdrehzahl
F Federkraft
a1 erster Verdrehwinkel
a2 zweiter Verdrehwinkel
T Tangente

## Patentansprüche

1. Antrieb mit einem Zweigang-Getriebe (1) mit einer elektrischen Maschine (2), die an einer Eingangswelle (9) angebunden ist, wobei die Eingangswelle (9) zwei Schalträder (8A, 7A) für zwei Gangstufen (8, 7), zwei Kupplungen (K1, K2) in einer Kupplungseinheit (K) und zwei Freiläufe (5, 6) trägt, und an eine Ausgangswelle (10) mit zwei Festrädern (8B, 7B) und einem Endabtriebsrad (12) anbindbar ist, wobei die Kupplungen (K1, K2) mit einem rein mechanischen Fliehkraftmodul (4) als einzigem Schaltelement verbunden und schaltbar sind und das Zweigang-Getriebe (1) mit einem Hydraulikmodul (3) verbunden ist, das nur zur Beölung der Kupplungen (K1, K2) dient und einen Hydraulikzylinder mit einem Kolben aufweist, wobei der Kolben des Hydraulikzylinders rein mechanisch bewegt wird.

2. Antrieb nach Anspruch 1, **dadurch gekennzeichnet, dass** die Kupplungseinheit (K) und das Fliehkraftmodul (4) zwischen Federpaketen (13, 14) entlang der Getriebeeingangswelle (9) angeordnet sind.

3. Antrieb nach einem der vorhergehenden Ansprüche, **dadurch gekennzeichnet, dass** die Drehung des Fliehkraftmoduls (4) eine axiale Bewegung einer Reaktionsscheibe (20) im Fliehkraftmodul (4) bewirkt.

4. Antrieb nach Anspruch 3 **dadurch gekennzeichnet, dass** die Reaktionsscheibe (20) mit einer Schaltgabel parallel zur Schaltung der Kupplungen (K1, K2) den Hydraulikzylinder aktuiert.

5. Antrieb nach einem der vorhergehenden Ansprüche, **dadurch gekennzeichnet, dass** das Fliehkraftmodul (4) auf dem Schaltrad (8A) der zweiten Gangstufe (8) und die Kupplungseinheit (K) zwischen dem Schaltrad (7A) der ersten Gangstufe und dem Fliehkraftmodul (4) montiert ist.

6. Antrieb nach einem der vorhergehenden Ansprüche, **dadurch gekennzeichnet, dass** die Kupplungseinheit (K) vormontiert ist und dass Druckringe (15, 16) die 2020P00131EP vormontierte Kupplungseinheit (K) zusammenhalten und die kraftschlüssige Verbindung zum Fliehkraftmodul (4) bilden.

7. Antrieb nach einem der vorhergehenden Ansprüche, **dadurch gekennzeichnet, dass** das Fliehkraftmodul (4) einen Aufbau aus Scheiben (17, 18, 19, 20), Nuten und Taschen (17A, 17B, 18A, 18A', 18B, 18B', 18C, 19A, 19B, 20A), Fliehgewichten (22 ), Radialfedern (23), Rampen (17C, 19C, 19D) und einen in der Drehung limitierten Freilauf (21) aufweist, der eine Drehbewegung des Außenrings (21C) bei festgehaltenem Innenring (21A) in einer ersten Drehrichtung (p) für einen ersten Verdrehwinkel ermöglicht, und die Drehbewegung des Innenrings (21A) bei festgehaltenem Außenring (21C) in einer zweiten Drehrichtung (p') für einen zweiten Verdrehwinkel verhindert und eine Drehbewegung des Innenrings (21A) bei festgehaltenem Außenring (21C) in einer ersten Drehrichtung (p) für einen ersten Verdrehwinkel ermöglicht.

## Claims

1. Drive with a two-speed transmission (1), with an electric machine (2) which is connected to an input shaft (9), wherein the input shaft (9) carries two shift wheels (8A, 7A) for two gear stages (8, 7), two clutches (K1, K2) in a clutch unit (K), and two freewheels (5, 6), and is connectable to an output shaft (10) with two fixed wheels (8B, 7B) and with a final driven wheel (12), wherein the clutches (K1, K2) are connected to and switchable by way of a purely mechanical centrifugal force module (4) as the sole switching element and the two-speed transmission (1) is connected to a hydraulic module (3) serving merely for oiling the clutches (K1, K2) and having a hydraulic cylinder with a piston, wherein the piston of the hydraulic cylinder is moved in a purely mechanical manner.

2. Drive according to Claim 1, **characterized in that** the clutch unit (K) and the centrifugal force module (4) are arranged between spring packs (13, 14) along the transmission input shaft (9).

3. Drive according to either of the preceding claims, **characterized in that** the rotation of the centrifugal force module (4) brings about an axial movement of a reaction disc (20) in the centrifugal force module (4).

4. Drive according to Claim 3, **characterized in that** the reaction disc (20), by way of a shift fork, actuates the hydraulic cylinder in parallel with the switching of the clutches (K1, K2).

5. Drive according to one of the preceding claims, **characterized in that** the centrifugal force module (4) is mounted on the shift wheel (8A) of the second gear stage (8), and the clutch unit (K) is mounted between the shift gear (7A) of the first gear stage and the centrifugal force module (4).

6. Drive according to one of the preceding claims, **characterized in that** the clutch unit (K) is pre-mounted, and **in that** pressure rings (15, 16) hold the pre-mounted clutch unit (K) together and form the force-fitting connection to the centrifugal force module (4).

7. Drive according to one of the preceding claims, **characterized in that** the centrifugal force module (4) has a structure comprising discs (17, 18, 19, 20), grooves and pockets (17A, 17B, 18A, 18A', 18B, 18B', 18C, 19A, 19B, 20A), centrifugal weights (22), radial springs (23), ramps (17C, 19C, 19D) and a freewheel (21) limited in terms of rotation, which allows a rotational movement of the outer ring (21C) in a first direction of rotation (p) for a first angle of rotation with the inner ring (21A) held fixed, and which prevents the rotational movement of the inner ring (21A) in a second direction of rotation (p') for a second angle of rotation with the outer ring (21C) held fixed and allows a rotational movement of the inner ring (21A) in a first direction of rotation (p) for a first angle of rotation with the outer ring (21C) held fixed.

## Revendications

1. Entraînement comprenant une transmission à deux vitesses (1) et une machine électrique (2) qui est reliée à un arbre d'entrée (9), l'arbre d'entrée (9) portant deux roues de commutation (8A, 7A) destinées à deux étages de vitesses (8, 7), deux embrayages (K1, K2) dans une unité d'embrayage (K) et deux roues libres (5, 6), et qui peut être reliée à un arbre de sortie (10) comprenant deux roues fixes (8B, 7B) et une roue de sortie finale (12), les embrayages (K1, K2) pouvant être commutés et étant reliés à un module de force centrifuge purement mécanique (4) comme élément de commutation unique et la transmission à deux vitesses (1) étant reliée à un module hydraulique (3) qui sert uniquement à lubrifier les embrayages (K1, K2) et qui comporte un vérin hydraulique pourvu d'un piston, le piston du vérin hydraulique étant déplacé de manière purement mécanique.

2. Entraînement selon la revendication 1, **caractérisé en ce que** l'unité d'embrayage (K) et le module de force centrifuge (4) sont disposés entre des blocsressorts (13, 14) le long de l'arbre d'entrée de transmission (9).

3. Entraînement selon l'une des revendications précédentes, **caractérisé en ce que** la rotation du module de force centrifuge (4) provoque un mouvement axial d'un disque de réaction (20) dans le module de force centrifuge (4).

4. Entraînement selon la revendication 3, **caractérisé en ce que** le disque de réaction (20) actionne le vérin hydraulique avec une fourchette de commutation parallèlement à la commutation des embrayages (K1, K2).

5. Entraînement selon l'une des revendications précédentes, **caractérisé en ce que** le module de force centrifuge (4) est monté sur la roue de commutation (8A) du deuxième étage de vitesse (8) et l'unité d'embrayage (K) est montée entre la roue de commutation (7A) du premier étage de vitesse et le module de force centrifuge (4).

6. Entraînement selon l'une des revendications précédentes, **caractérisé en ce que** l'unité d'embrayage (K) est pré-montée et **en ce que** des anneaux de pression (15, 16) maintiennent l'unité d'embrayage (K) pré-montée et forment la liaison en force au module de force centrifuge (4).

7. Entraînement selon l'une des revendications précédentes, **caractérisé en ce que** le module de force centrifuge (4) comporte une structure formée de disques (17, 18, 19, 20), de rainures et de poches (17A, 17B, 18A, 18A', 18B, 18B', 18C, 19A, 19B, 20A), des masselottes (22), des ressorts radiaux (23), des rampes (17C, 19C, 19D) et une roue libre à rotation limitée (21) qui permet à la bague extérieure (21C) d'effectuer un mouvement de rotation, pendant que la bague intérieure (21A) est maintenue en place, dans un premier sens de rotation (p) avec un premier angle de rotation, et qui empêche la bague intérieure (21A) d'effectuer le mouvement de rotation, lorsque la bague extérieure (21C) est maintenue en place, dans un deuxième sens de rotation (p') avec un deuxième angle de rotation et qui permet à la bague intérieure (21A) d'effectuer un mouvement de rotation, lorsque la bague extérieure (21C) est maintenue en place, dans un premier sens de rotation (p) avec un premier angle de rotation.
